# EUROPEAN PATENT SPECIFICATION

(11) **EP 2 806 726 B1**
(45) Date of publication and mention of the grant of the patent: **01.08.2018**
(21) Application number: 12866818.3
(22) Date of filing: 23.01.2012
(51) Int. Cl.: A01D 34/82, B62D 51/06

(54) **WALK BEHIND POWER EQUIPMENT HANDLE HEIGHT ADJUSTER**
HÖHENEINSTELLER FÜR HANDGEFÜHRTEN LEISTUNGSANLAGENGRIFF
DISPOSITIF D'AJUSTAGE DE POIGNÉES EN HAUTEUR D'UN ÉQUIPEMENT À MOTEUR DIRIGÉ PAR UN HOMME À PIED

(43) Date of publication of application: 03.12.2014
(73) Proprietor: Husqvarna AB, 561 82 Huskvarna (SE)
(72) Inventor: STRANGE, Shoan, Huntersville, North Carolina 28078 (US); MODZIK, Andy, Mooresville, North Carolina 28117 (US)
(74) Representative: Schröer, Gernot H.
(86) International application number: PCT/US2012/022171
(87) International publication number: WO 2013/112123

(56) References cited:
- EP-A2- 1 116 828
- WO-A1-00/06444
- US-A- 3 638 973
- US-A- 4 738 084
- US-A- 4 738 084
- US-A- 5 163 275
- US-A1- 2005 188 664
- US-B1- 6 449 935

## Description

### TECHNICAL FIELD

Example embodiments generally relate to outdoor power equipment and, more particularly, relate to a handle height adjuster for walk behind power equipment.

### BACKGROUND

Grounds care/yard maintenance and other outdoor tasks associated with grooming and maintaining property are commonly performed using various tools and/or machines that are configured for the performance of corresponding specific tasks. Certain tasks, like snow removal, are typically performed by snow removal equipment such as snow blowers or snow throwers that may be mounted on riding or walk behind devices. Other tasks, like lawn mowing may be performed by riding or walk behind lawn mowers. Still other tasks, such as tilling, trimming and/or the like may also be employed by either riding or walk behind devices. Moreover, in some cases, such tasks may be performed using hand held power equipment.

When walk behind models are used, an operator typically walks behind the device and steers the device using a handle assembly that extends rearward toward an operator station. These walk behind devices may be self propelled and/or may move responsive to a pushing force provided by the operator. The handle assembly on such devices may include a handle apparatus (e.g., a handlebar or handles) that is provided at the end of an extension portion (e.g., one or more rods or bars) extending from the frames of the devices. In some cases, controls for operating the engine, performing a working function (e.g., cutting, trimming, tilling, ejecting material, and/or the like), or engaging self propelled functionality of the device may be provided at the operator station (e.g., on or in connection with the handle apparatus).

However, since operators may have many different statures and may also have corresponding different desires with respect to handling these devices, it may be desirable to enable the operators to adjust the height of the handle assembly. Such adjustment is typically performed using friction based components that are locally adjusted, and quite frequently require tools to be adjusted. Moreover, many of such adjustments can only be made to discrete or fixed locations along the range of motion of the components of the handle assembly. These adjustments arc therefore also necessarily performed when the device is not actively in use.

US 4,738,084 A describes a power grass mower comprising a grass cutter disposed under a mower body, a cutter housing, a travelling mechanism adapted to have the mower travel, a power source mounted on the mower body to drive the cutter and the travelling mechanism, and a handle member connected to the mower body. The power grass mower further comprises a handle position setting mechanism for interconnecting a lower end part of the handle member with the mower body, such that the handle member is selectively turningly movable in the plan view thereof, relative to the mower body, substantially about the lower end part thereof, and for locking to set the handle member at a voluntarily selected turning position thereof.

US 6,449,935 B1 describes an improved handle assembly for an appliance such as a lawnmower having front and rear wheels includes a handlebar which is pivotally connected to the appliance through at least one mounting point proximate the front wheels and which extends upwardly and rearwardly until it terminates with a generally horizontal push bar adapted for gripping by the operator. The handlebar preferably includes an arcuate bend which decreases the angle at which the upper portion of the handlebar rises toward the push bar. The handle assembly also includes a handle height control mechanism which is connected at a lower end to the appliance proximate the rear wheels and at an upper end to the handlebar. The handle height control mechanism allows the handlebar to pivot about the front mounting point through a limited range of movement.

### BRIEF SUMMARY OF SOME EXAMPLES

Some example embodiments may therefore provide a handle apparatus that is adjustable and/or a walk behind power equipment device employing such a handle apparatus. Moreover, some embodiments may provide that the adjustment to the handle apparatus may be provided remotely and may also provide for fixing of an extension portion of the handle apparatus at a selected one of a plurality of non-discrete positions relative to a frame or housing of the device over an entirety of a range of motion of the extension portion. Thus, the operator can remotely adjust a height of the handle assembly even while the device is actively in use without the use of tools.

In one example embodiment, a walk behind power equipment device is provided. The walk behind power equipment device may include a frame, an engine supported at least in part by the frame, a mobility assembly, a working assembly, and a handle assembly. The mobility assembly and the working assembly may be operably coupled to the frame and the engine to provide to provide mobility and a working function of the walk behind power equipment device, respectively, responsive to operation of the engine. The handle assembly may be operably coupled to the frame to provide steering inputs responsive to which the mobility assembly moves the walk behind power equipment device. The handle assembly includes a handle apparatus, at least one extension portion and a handle height adjuster. The at least one extension portion extends between the handle apparatus and the frame. The at least one extension portion is coupled to the handle height adjuster. The handle height adjuster is remotely adjustable to fix the at least one extension portion at a selected one of a plurality of non-discrete positions relative to the frame over an entirety of a range of motion of the extension portion.

In another example embodiment, an adjustable handle assembly for a walk behind power equipment device is provided. The adjustable handle assembly may include a handle apparatus, at least one extension portion, and a handle height adjuster. The at least one extension portion may extend between a handle apparatus used to steer the walk behind power equipment device and a frame of the walk behind power equipment device. The at least one extension portion may be coupled to the handle height adjuster. The handle height adjuster may be remotely adjustable to fix the at least one extension portion at a selected one of plurality of non-discrete positions relative to the frame over an entirety of a range of motion of the extension portion.

Some example embodiments may improve the ability of operators to control the height of a handle assembly to improve comfort and operability of walk behind power equipment devices.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a side perspective view of a walk behind power equipment device with an adjustable handle height according to an example embodiment;
FIG. 2 illustrates a side perspective view of the walk behind power equipment device of FIG. 1 having the handle height adjusted to a different elevation according to an example embodiment;
FIG. 3, which includes FIGS. 3A and 3B, illustrates a comparison of the angles at which the extension portions shown in FIGS. 1 and 2 extend according to an example embodiment;
FIG. 4 illustrates a side perspective view of a walk behind power equipment device with an adjustable handle height employed by splitting the extension portion into at least two pieces according to an example embodiment; and
FIG. 5 illustrates a side perspective view of the walk behind power equipment device of FIG. 4 having the handle height adjusted to a different elevation according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments may improve an operator's experience associated with operating a walk behind power equipment device (e.g., a snow blower or snow thrower, a tiller, a lawn mower, and/or the like) generally by improving the operator's ability to establish the height of the handle assembly of the device. Moreover, in an example embodiment, the operator may be enabled to make height adjustments while operating the device and without the use of tools. The operator may further be enabled to initiate adjustments remotely to any selected one of a plurality of non-discrete locations throughout any possible position in which the handle assembly may be fixed over its entire range of motion. Thus, any one of an infinite number of possible positions along the range of motion of the handle assembly may be selected for use.

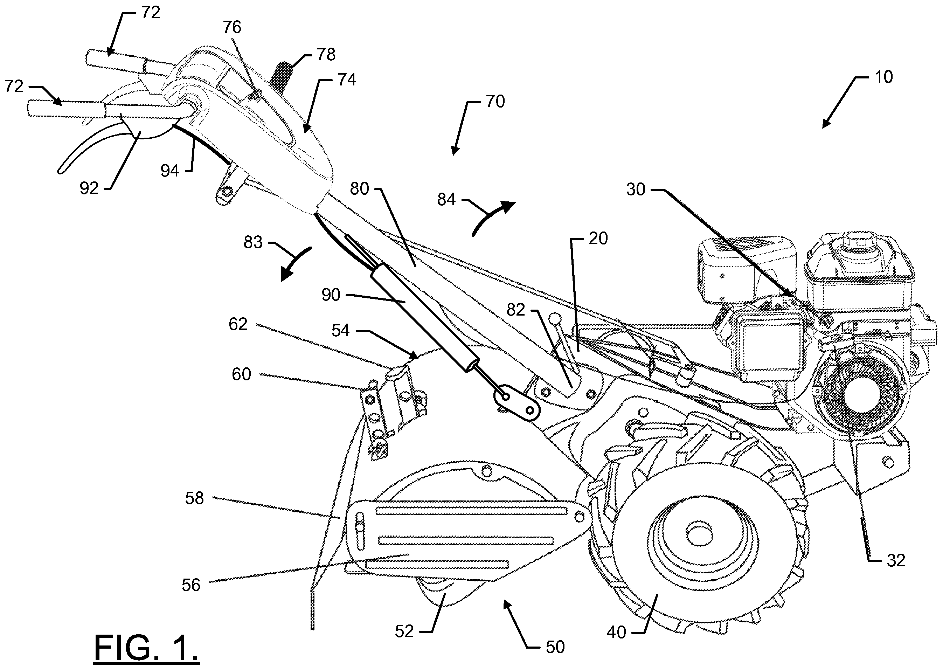

FIG. 1 illustrates a side view of a walk behind power equipment device according to an example embodiment. Although the walk behind power equipment device of FIG. 1 is a tiller 10, it should be appreciated that example embodiments may also be practiced in connection with any other type of walk behind power equipment as well. For example, other embodiments may also be practiced in connection with snow blowers or snow throwers, trimmers, edgers, mowers, and/or the like. However, the tiller 10, by virtue of the fact that it digs into the ground during operation and thereby operates at different heights during transport and tilling operation, may be a good example of a device that may benefit from an example embodiment.

The tiller 10 may include a chassis or frame 20 to which various components of the tiller 10 may be attached. The frame 20 may support an engine 30, such as a gasoline powered engine. Operation of the engine 30 may be initiated by a recoil starter via pulling of a recoil starter handle 32 by the operator. However, in other embodiments, walk behind power equipment devices may alternatively be started via a key, switch or other similar device.

The tiller 10 may include wheels 40 or continuous tracks forming a mobility assembly on which a substantial portion of the weight of the tiller 10 may rest, when the tiller 10 is stationary. The wheels 40 or continuous tracks may also provide for mobility of the tiller 10. In some cases, the mobility assembly may be driven via power from the engine 30. However, in other cases, the mobility assembly may simply provide for mobility of the tiller 10 responsive to pushing by the operator.

The tiller 10 may also include a working assembly 50. In this example, the working assembly 50 includes a rotatable set of tines 52 that are configured to work, or dig up, the ground responsive to rotation of the set of tines 52 by operable coupling to the engine 30. The operable coupling of the set of tines 52 to the engine 30 may be selectively engaged and/or disengaged (e.g., via a clutch, a series of belts/pulleys, a friction wheel or other similar devices). In other alternative example embodiments, the working assembly 50 may be a rotatable cutting blade (e.g., for a lawn mower, trimmer or edger) or an auger and/or impeller (e.g., for a snow blower or snow thrower). On the tiller 10, the set of tines 52 may be housed within a shroud 54 including side panels 56 and a leveling shield 58. The shroud 54 may prevent or inhibit dirt and debris from being expelled from the vicinity of the set of tines 52 and toward the operator or other people or objects nearby. The tiller 10 may also include a depth stake 60 and a drag stake 62 to facilitate operation of the tiller 10.

In an example embodiment, a handle assembly 70 may extend rearward and upward from the frame 20 above the shroud 50 in order to enable the operator to engage the handle assembly 70 and operate the tiller 10 while walking behind the tiller 10 (e.g., at the operator station). The handle assembly 70 may include a handle apparatus 72, which may include a handlebar or handles (as shown in FIG. 1). In some embodiments, a control panel 74 may also be positioned proximate to the handle apparatus 72 to provide speed and/or other engine controls (e.g., via throttle control 76 and/or shift lever 78). Alternatively or additionally, the control panel 74 may host other functional controllers for operation of the tiller 10. However, the control panel 74 may be eliminated or serve other functions in other example embodiments. The handles or handlebar employed in connection with the handle apparatus 72 may, in some cases, include one or more levers, bails or other movable control members that can be grasped by the operator while the operator simultaneously grasps the handle apparatus 72. These levers, bails or other movable control members may be operated for engagement of the working assembly 50 or for other control functions that impact operation of the walk behind power equipment device.

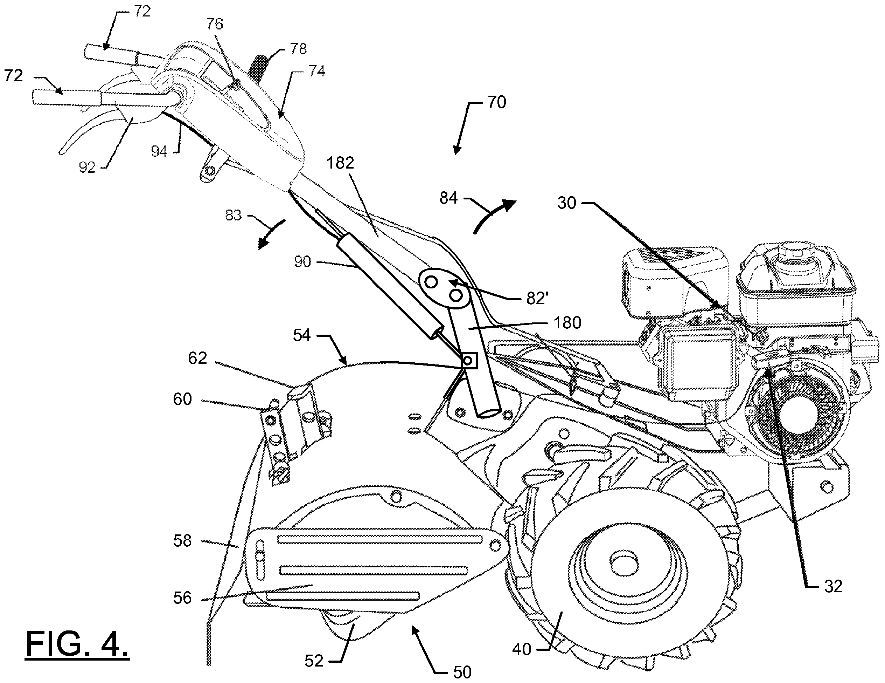

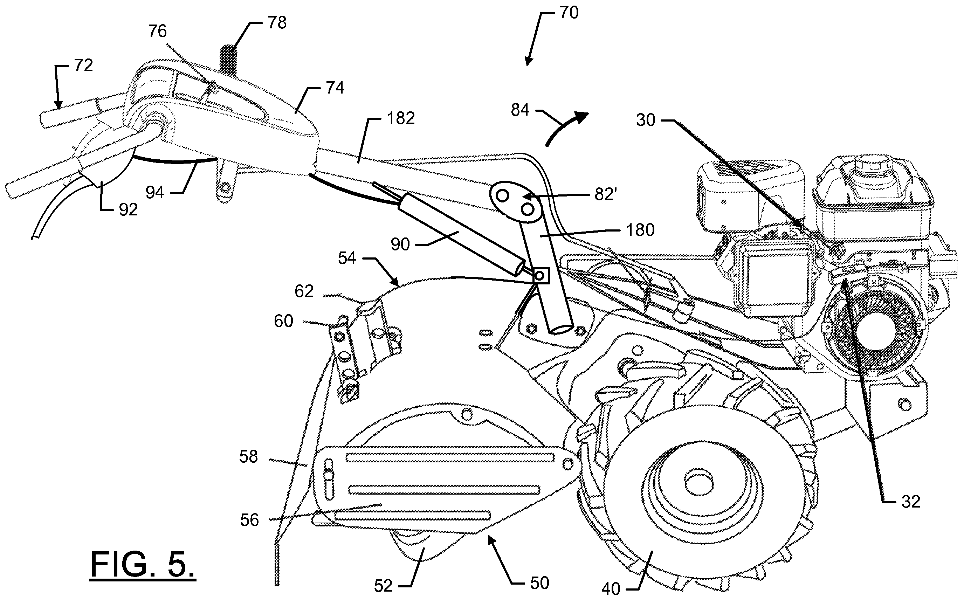

In an example embodiment, an extension portion 80 may be provided as a component of the handle assembly 70 to operably couple the handle apparatus 72 to the frame 20. In an example embodiment, the extension portion 80 may be a single rigid member (e.g., a single rod, tube, bar, beam, shaft or other linearly extending component) extending rearward from a portion of the frame 20 to provide a support structure for the handle apparatus 72. However, in other example embodiments, the extension portion 80 may include two or more linearly extending rigid members that may be parallel to each other or that may be connected to each other via an articulated joint (e.g., see flexible joint 82' in FIGS. 4 and 5). Moreover, in some cases, the extension portion 80 may include one or more bends or bows along a length thereof and/or body panels that may obscure the view of the extension portion 80 itself. The extension portion 80 may be mounted to the frame 20 via a flexible joint 82 that enables the extension portion 80 to rotate in at least a first direction (shown by arrow 83) and a second direction (show by arrow 84) over a range of motion defined by the limits of movement permitted by the flexible joint 82 and/or any other components that may block movement of the extension portion 80.

Thus, for example, the extension portion 80 may include a first end that is operably coupled to the frame 20 (e.g., at the flexible joint 82) and then the extension portion may extend to a second end that is operably coupled to the handle apparatus 72 and/or the control panel 74. The flexible joint 82 may then form an axis of rotation about which the extension portion 80 may be enabled to rotate in order to change the angle between the extension portion 80 and the frame 20 or the ground (e.g., the surface on which the tiller 10 operates). However, since the tiller 10 will by its nature dig its rear into the ground during operation, the angle between the extension portion 80 and the ground may change during operation. Thus, the angle between the extension portion 80 and the frame 20 may be the only angle that remains fixed until adjusted by the operator as described herein. Moreover, example embodiments may enable the operator to remotely adjust the angle of the extension portion 80 relative to the frame 20 so that the change in elevation of the handle apparatus 72 that occurs when transitioning between a transport state and a working state of the tiller 10 may be accounted for by the operator.

In an example embodiment, the handle assembly 70 may further include a handle height adjuster 90 disposed to extend between the extension portion 80 and a portion of the frame 20 to facilitate adjustment of the angle between the extension portion 80 and the frame 20. In the example of FIG. 1, the handle height adjuster 90 extends between the flexible joint 82 and a portion of the extension portion 80 that is farther away from the frame 20 (e.g., proximate to the handle apparatus 72 or the control panel 74). As such, for example, the handle height adjuster 90 may include a first end that is operably coupled to the frame (or to the engine 30, engine mount, shroud 50 or any other fixed component of the tiller 10) and a second end that is operably coupled to the extension portion 80. In an example embodiment, both the first end and second end of the handle height adjuster 90 may be flexibly coupled to their respective anchor points to enable the first and second ends to rotate slightly to accommodate changes in the angle between the extension portion 80 and the frame 20 when adjustments are made.

The handle height adjuster 90 of FIG. 1 is disposed below the extension portion 70. However, it should be appreciated that the handle height adjuster 90 could alternatively be positioned above the extension portion 80. The handle height adjuster 90 may be configured to extend or contract to accommodate movement of the extension portion 80 in the first direction or the second direction. Moreover, in an example embodiment, the handle height adjuster 90 may be configured to be fixable in its length by operator input (e.g., remote operator input) over an infinite number of positions along the range of motion of the extension portion 80 in the first and second directions. In other words, the handle height adjuster 90 may be fixable over a plurality of non-discrete selectable locations (or at a plurality of non-discrete selectable lengths) along the entirety of the range of motion of the extension portion 80.

In an example embodiment, the handle height adjuster 90 may be embodied as a gas or air cylinder. Furthermore, in some embodiments, the air cylinder may be provided with a remotely operable two way valve. The remotely operable two way valve may be operated such that the valve may be opened to enable pressurized gas or air within the air cylinder to be moved in either direction through the two way valve to permit movement of a plunger disposed to separate two compartments of the air cylinder in either direction (e.g., toward either of the separate compartments). When the valve is closed, air may be locked in each separate compartment of the air cylinder to fix a position of at least one shaft extending out of an end of the air cylinder from the plunger. The shaft extending out of one end (or both ends) of the air cylinder may therefore elongate or contract the length of the handle height adjuster 90 dependent upon a position of the internal plunger as described above in order to adjust a position of the extension portion 80 at a selected point along its entire range of motion.

The number and location of the positions at which the plunger may be fixed within the air cylinder (e.g., by closure of the two way valve) may not be predefined. As such, the plunger may be disposed at any of an infinite number of potential locations within the confines of the air cylinder. This means that the handle height adjuster 90 is not limited to being fixable at discrete intervals since the air cylinder does not have any discrete fixing points therein. Having a capability for non-discrete fixing locations, or infinite number of fixing points along the range of motion of the extension portion 80, may provide an advantage to operators that might otherwise find that one fixed position is too high, while the next available fixed position is too low. Furthermore, the ability to remotely actuate the handle height adjuster 90 may further provide an operator with the ability to adjust the height of the handle apparatus 72 without leaving the operator station and without the use of tools.

In an example embodiment, a remote actuator 92 may be provided as a hand operated lever disposed at the handle apparatus 72. However, in other example embodiments, the remote actuator 92 may be embodied as a foot pedal or other lever or switch (e.g., located at the control panel 74) that the operator may actuate without leaving the operator station. The remote actuator 92 may be connected to the handle height adjuster 90 via a cable 94 to actuate the two way valve. Thus, for example, the operator may be transporting the tiller 10 to a working area with a first selected handle height that provides the handle apparatus 72 at a particular height above the surface of the ground and feels comfortable to the operator. Then, when the tiller 10 begins operation of the working assembly 50, the set of tines 52 may dig into the earth and lower the height of the handle apparatus 72 relative to the surface of the ground (although the position of the handle apparatus 72 relative to the frame 20 remains the same as the first selected handle height). The operator may then be enabled to actuate the remote actuator 92 (either while digging or during a pause in the digging operation) to allow the handle height adjuster 90 to be lengthened in order to permit the handle apparatus 72 to be moved to a second selected handle height that is higher than the first selected handle height relative to the frame 20, but which may restore the handle apparatus 72 to the particular height above the ground that was comfortable during transport.

In some examples, during actuation of the remote actuator 92, the two way valve may be opened to enable the plunger in the air cylinder to be repositioned to any desirable position (e.g., without being limited to discrete fixing locations along a range of motion of the plunger within the cylinder). Thus, without limitation (except for the extreme limits of shortest and longest possible lengths of the handle height adjuster 90), the operator may select and lock the handle height adjuster 90 at a desired position that feels comfortable. Releasing the remote actuator 92 may shut the two way valve and lock air in the compartments of the air cylinder to prevent movement of the plunger and fix the length of the handle height adjuster 90 accordingly.

As such, the handle height adjuster 90 may generally be configured to have a released state that may be activated remotely to enable movement of the extension portion 80 relative to the frame 20 to any desirable point along the entirety of the range of motion of the extension portion 80. The handle height adjuster 90 may also be configured to have a fixed state in which the handle height adjuster 90 is not activated and the extension portion 80 is held fixed relative to the frame 20 at a corresponding point along the range of motion of the extension portion 80. The fixed state may further be provided without mechanical friction and the shift between the fixed and released states may be entirely accomplished remotely (e.g., at the operator station) without the assistance of tools.

Alternatives to the use of an air cylinder for the handle height adjuster 90 may also be provided in some cases. For example, the handle height adjuster 90 may be embodied as a threaded lead screw upon which a movable support assembly may ride to effectively lengthen or shorten the contact point at which the extension portion 80 is supported. A position of the movable support assembly may be remotely operable (e.g., at the control panel 74). As yet another example alternative, a servomotor may be used to adjust the point at which the extension portion 80 is supported. Other alternatives may also be provided.

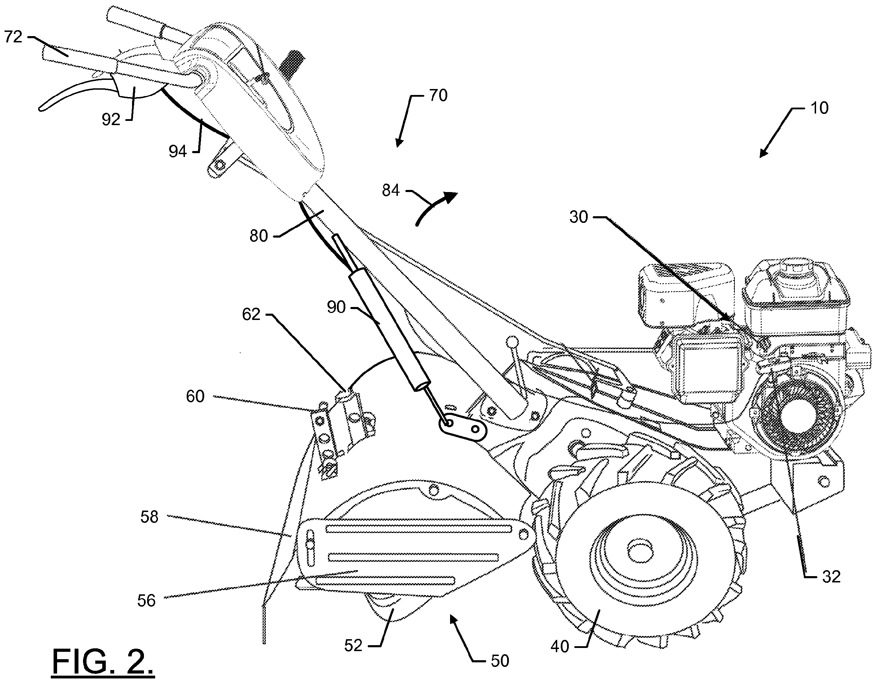

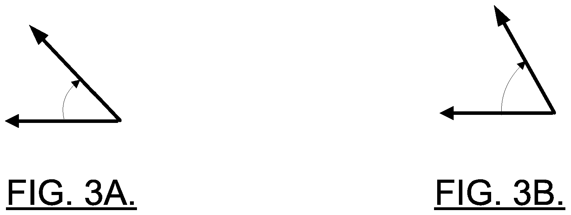

FIG. 2 illustrates the tiller 10 of FIG. 1 after having the handle height adjuster 90 operated to raise the height of the handle apparatus 72 (e.g., by moving the extension portion 80 in the second direction 84). FIG. 3A illustrates the angle between the extension portion 80 and the surface of the ground in FIG. 1 and FIG. 3B illustrates the angle between the extension portion 80 and the surface of the ground in FIG. 2 to show how the extension portion 80 has been moved in the second direction 84 to elevate the height of the handle apparatus 72. In some embodiments, such as the example tiller embodiment described above, it may be expected that a shift from operation in one state (e.g., the transport state) to another state (e.g., the working state) may typically require movement of the extension portion 80 in the same direction (e.g., the second direction 84). Accordingly, operation of the handle height adjuster 90 may be assisted (or biased) with respect to movement in that direction. The "assisting force" or "biasing force" may be provided by a spring force, hydraulic or air pressure or any other suitable method, and may be applied when the remote actuator 92 is actuated. Thus, in some embodiments, the operation of the handle height adjuster 90 may be assisted in at least one direction by a biasing force. Movement in the opposing direction may therefore need to overcome the biasing force. Meanwhile, some embodiments may not apply any biasing force.

As indicated above, instead of being a single member, the extension portion may be split into two or more component portions in some example embodiments. In such an embodiment, the handle height adjuster 90 may extend between the component portions of the extension portion instead of extending between the extension portion 80 and the frame 20 (as shown in FIGS. 1 and 2). FIGS. 4 and 5 illustrate an example in which the extension portion is broken into two component parts (e.g., a fixed extension portion 180 and a movable extension portion 182) and the flexible joint 82' is provided between the component parts of the extension portion. One of the component parts may be fixed to the frame 20 (e.g., the fixed extension portion 180) and the other may be fixed to the handle apparatus 72 (e.g., the movable extension portion 182) such that lengthening or shortening of the handle height adjuster 90 may change the angle between the two component parts and thereby change the elevation or height of the handle apparatus 72. FIG. 4 illustrates the handle height adjuster 90 positioned to support a relatively higher handle apparatus 72 height. Meanwhile, FIG. 5 illustrates the handle height adjuster 90 positioned to support a lower handle apparatus 72 height. The example embodiment of FIGS. 4 and 5 therefore provides an alternative connection configuration for the handle height adjuster 90 while still enabling the operator to remotely control and set (or fix) a position of the extension portion (or at least a portion thereof (e.g., the movable extension portion 180)) at a selected one of a plurality of non-discrete positions relative to the frame 20 over an entirety of a range of motion of the extension portion 80.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A walk behind power equipment device (10),
the walk behind power equipment device comprising
a frame (20);
an engine (30) supported at least in part by the frame (20);
a mobility assembly (40) operably coupled to the frame (20) and to the engine (30) to provide mobility of the walk behind power equipment device responsive to operation of the engine (30);
a working assembly (50) operably coupled to the frame (20) and to the engine (30) to provide performance of a working function of the walk behind power equipment device (10) responsive to operation of the engine (30); and
an adjustable handle assembly (70) operably coupled to the frame (20) to provide steering inputs responsive to which the mobility assembly (40) moves the walk behind power equipment device (10),
the handle assembly (70) comprising:
a handle apparatus (72);
at least one extension portion (182, 180); and
a handle height adjuster (90),
wherein the at least one extension portion (182, 180) extends between the handle apparatus (72) used to steer the walk behind power equipment device (10) and the frame (20) of the walk behind power equipment device (10),
wherein the at least one extension portion (182, 180) is operably coupled to the handle height adjuster (90),
**characterized in that** the handle height adjuster (90) is remotely adjustable to fix the at least one extension portion (182, 180) at a selected one of plurality of non-discrete positions relative to the frame (20) over an entirety of a range of motion of the at least one extension portion (182, 180),
the handle height adjuster (90) comprising a released state activated remotely to enable movement of the at least one extension portion (182, 180) relative to the frame (20) to any desirable point along the entirety of the range of motion of the at least one extension portion (182, 180) and a fixed state in which the handle height adjuster (90) is not activated and the at least one extension portion (182, 180) is held fixed relative to the frame (20) at a corresponding point along the range of motion of the at least one extension portion (182, 180),
wherein the handle height adjuster (90) comprises an air cylinder,
wherein the at least one extension portion (182, 180) is split into two linearly extending rigid component portions, by means of a fixed extension portion (180) and a movable extension portion (182),
wherein a flexible joint (82') is provided between the two component portions of the at least one extension portion,
so that the at least one extension portion (80) includes two linearly extending rigid portions that are connected to each other via the flexible joint (82') as articulated joint,
wherein the handle height adjuster (90) extends between the component portions of the at least one extension portion,
wherein the fixed extension portion (180) is fixed to the frame (20) and the movable extension portion (182) is fixed to the handle apparatus (72) such that lengthening or shortening of the handle height adjuster (90) changes the angle between the two component parts and thereby changes the elevation or height of the handle apparatus (72).

2. The walk behind power equipment device of claim 1, wherein the air cylinder comprises a two-way valve disposed therein.

3. The walk behind power equipment device of any of claims 1 to 2,
wherein the handle height adjuster (90) is disposed at the handle apparatus (72).

4. The walk behind power equipment device of any of claims 1 to 3,
wherein the handle height adjuster (90) comprises a foot operated pedal.

## Patentansprüche

1. Handgeführte Antriebsaggregatvorrichtung (10),
wobei die handgeführte Antriebsaggregatvorrichtung aufweist einen Rahmen (20);
einen Motor (30), welcher zumindest zum Teil von dem Rahmen (20) gehalten wird;
eine Beweglichkeitsbaugruppe (40), welche wirksam mit dem Rahmen (20) und dem Motor (30) gekoppelt ist, um Beweglichkeit der handgeführten Antriebsaggregatvorrichtung als Reaktion auf den Betrieb des Motors (30) bereitzustellen;
eine Arbeitsbaugruppe (50), welche wirksam mit dem Rahmen (20) und dem Motor (30) gekoppelt ist, um die Erfüllung einer Arbeitsfunktion der handgeführten Antriebsaggregatvorrichtung (10) als Reaktion auf den Betrieb des Motors (30) bereitzustellen; und
eine einstellbare Griffbaugruppe (70), welche wirksam mit dem Rahmen (20) gekoppelt ist, um Lenkeingaben bereitzustellen, worauf hin die Beweglichkeitsbaugruppe (40) die Antriebsaggregatvorrichtung (10) bewegt,
wobei die Griffbaugruppe (70) aufweist:
ein Griffgerät (72);
mindestens einen Verlängerungsabschnitt (182, 180); und
einen Griff-Höheneinsteller (90),
wobei sich der mindestens eine Verlängerungsabschnitt (182, 180) zwischen dem Griffgerät (72), welches zum Lenken der Antriebsaggregatvorrichtung (10) verwendet wird, und dem Rahmen (20) der handgeführten Antriebsaggregatvorrichtung (10) erstreckt,
wobei der mindestens eine Verlängerungsabschnitt (182, 180) wirksam mit dem Griff-Höheneinsteller (90) gekoppelt ist,
**dadurch gekennzeichnet, dass** der Griff-Höheneinsteller (90) entfernt einstellbar ist, um den mindestens einen Verlängerungsabschnitt (182, 180) an einer ausgewählten Position von einer Vielzahl von nicht-diskreten Positionen in Bezug zu dem Rahmen (20) über eine Gesamtheit von einem Bewegungsbereich des mindestens einen Verlängerungsabschnitts (182, 180) festzulegen,
der Griff-Höheneinsteller (90) einen gelösten Zustand, welcher entfernt aktiviert wird, um Bewegung des mindestens einen Verlängerungsabschnitts (182, 180) in Bezug zu dem Rahmen (20) zu irgendeinem gewünschten Punkt entlang der Gesamtheit des Bewegungsbereichs des mindestens einen Verlängerungsabschnitts (182, 180) zu ermöglichen,
und einen festgelegten Zustand aufweist, in welchem der Griff-Höheneinsteller (90) nicht aktiviert ist und der mindestens eine Verlängerungsabschnitt (182, 180) in Bezug zu dem Rahmen (20) an einem entsprechenden Punkt entlang des Bewegungsbereichs des mindestens einen Verlängerungsabschnitts (182, 180) festgelegt gehalten wird,
wobei der Griff-Höheneinsteller (90) einen Luftzylinder aufweist, wobei der mindestens eine Verlängerungsabschnitt (182, 180) mittels eines festen Verlängerungsabschnitts (180) und eines beweglichen Verlängerungsabschnitts (182) in zwei sich linear erstreckende starre Komponentenabschnitte geteilt ist, wobei ein flexibles Gelenk (82') zwischen den beiden Komponentenabschnitten des mindestens einen Verlängerungsabschnitts vorgesehen ist,
so dass der mindestens eine Verlängerungsabschnitt (80) zwei sich linear erstreckende starre Abschnitte umfasst, welche über das flexible Gelenk (82') als Gelenkverbindung miteinander verbunden sind,
wobei sich der Griff-Höheneinsteller (90) zwischen den Komponentenabschnitten des mindestens einen Verlängerungsabschnitts erstreckt,
wobei der feste Verlängerungsabschnitt (180) an dem Rahmen (20) befestigt ist und der bewegliche Verlängerungsabschnitt (182) an dem Griff-gerät (72) befestigt ist, so dass die Verlängerung oder die Verkürzung des Griff-Höheneinstellers (90) den Winkel zwischen den beiden Komponententeilen verändert und dadurch die Erhöhung oder Höhe des Griffgeräts (72) verändert.

2. Handgeführte Antriebsaggregatvorrichtung nach Anspruch 1, wobei der Luftzylinder ein darin angeordnetes Zweiwegeventil aufweist.

3. Handgeführte Antriebsaggregatvorrichtung nach einem der Ansprüche 1 bis 2, wobei der Griff-Höheneinsteller (90) an dem Griffgerät (72) angeordnet ist.

4. Handgeführte Antriebsaggregatvorrichtung nach einem der Ansprüche 1 bis 3, wobei der Griff-Höheneinsteller (90) ein fußbetätigtes Pedal aufweist.

## Revendications

1. Dispositif (10) pour un équipement à moteur dirigé par un homme à pied,
le dispositif pour un équipement à moteur dirigé par un homme à pied comprenant
un châssis (20);
un moteur (30) supporté au moins en partie par le châssis (20);
un ensemble de mobilité (40) accouplé fonctionnellement au châssis (20) et au moteur (30) pour assurer la mobilité du dispositif pour un équipement à moteur dirigé par un homme à pied, en réponse au fonctionnement du moteur (30);
un ensemble de travail (50) accouplé fonctionnellement au châssis (20) et au moteur (30) pour assurer la performance d'une fonction de travail du dispositif (10) pour un équipement à moteur dirigé par un homme à pied en réponse au fonctionnement du moteur (30); et
un ensemble de poignée (70) ajustable accouplé fonctionnellement au châssis (20) pour fournir des entrées directionnelles en réponse auxquelles l'ensemble de mobilité (40) déplace le dispositif (10) pour un équipement à moteur dirigé par un homme à pied,
l'ensemble de poignée (70) comprenant:
un appareil de poignée (72);
au moins une partie d'extension (182, 180); et
un dispositif d'ajustement de hauteur de poignée (90),
l'au moins une partie d'extension (182, 180) s'étendant entre l'appareil de poignée (72) utilisé pour diriger le dispositif (10) pour un équipement à moteur dirigé par un homme à pied et le châssis (20) du dispositif (10) pour un équipement à moteur dirigé par un homme à pied,
l'au moins une partie d'extension (182, 180) étant accouplée fonctionnellement au dispositif d'ajustement de hauteur de poignée (90),
**caractérisé en ce que** le dispositif d'ajustement de hauteur de poignée (90) est ajustable à distance pour fixer l'au moins une partie d'extension (182, 180) à une position sélectionnée parmi une pluralité de positions non distinctes par rapport au châssis (20) sur la totalité d'une plage de mouvement de l'au moins une partie d'extension (182, 180),
le dispositif d'ajustement de hauteur de poignée (90) comprenant un état libéré activé à distance pour permettre le mouvement de l'au moins une partie d'extension (182, 180) par rapport au châssis (20) jusqu'à un point quelconque souhaitable le long de la totalité de la plage de mouvement de l'au moins une partie d'extension (182, 180) et un état fixé dans lequel le dispositif d'ajustement de hauteur de poignée (90) n'est pas activé et l'au moins une partie d'extension (182, 180) est maintenue fixement par rapport au châssis (20) au niveau d'un point correspondant le long de la plage de mouvement de l'au moins une partie d'extension (182, 180),
le dispositif d'ajustement de hauteur de poignée (90) comprenant un cylindre pneumatique, l'au moins une partie d'extension (182, 180) étant divisée en deux parties constitutives rigides s'étendant linéairement, au moyen d'une partie d'extension fixe (180) et d'une partie d'extension déplaçable (182),
un joint flexible (82') étant prévu entre les deux parties constitutives de l'au moins une partie d'extension,
de telle sorte que l'au moins une partie d'extension (80) comporte deux parties rigides s'étendant linéairement qui sont connectées l'une à l'autre par le biais du joint flexible (82') en tant que joint articulé,
le dispositif d'ajustement de hauteur de poignée (90) s'étendant entre les parties constitutives de l'au moins une partie d'extension,
la partie d'extension fixe (180) étant fixée au châssis (20) et la partie d'extension mobile (182) étant fixée à l'appareil de poignée (72) de telle sorte que le rallongement ou le raccourcissement du dispositif d'ajustement de hauteur de poignée (90) modifie l'angle entre les deux parties constitutives et modifie ainsi l'élévation ou la hauteur de l'appareil de poignée (72).

2. Dispositif pour un équipement à moteur dirigé par un homme à pied selon la revendication 1, dans lequel le cylindre pneumatique comprend une soupape à deux voies disposée dans celui-ci.

3. Dispositif pour un équipement à moteur dirigé par un homme à pied selon l'une quelconque des revendications 1 et 2, dans lequel le dispositif d'ajustement de hauteur de poignée (90) est disposé au niveau de l'appareil de poignée (72).

4. Dispositif pour un équipement à moteur dirigé par un homme à pied selon l'une quelconque des revendications 1 à 3, dans lequel le dispositif d'ajustement de hauteur de poignée (90) comprend une pédale à commande au pied.
